# FASCICULE DE BREVET EUROPEEN

(11) **EP 2 338 743 B1**
(45) Date de publication et mention de la délivrance du brevet: **16.07.2014**
(21) Numéro de dépôt: 10306491.1
(22) Date de dépôt: 22.12.2010
(51) Int. Cl.: B60R 19/24, B62D 21/15

(54) **Ensemble pare-chocs pour véhicule automobile, partie d'extrémité de véhicule automobile comprenant un tel ensemble et véhicule automobile**
Stossstangeneinheit für Kraftfahrzeug, Kraftfahrzeugendteil mit einer solchen Einheit und Kraftfahrzeug
Bumper assembly for motor vehicle, motor vehicle end portion comprising such an assembly and motor vehicle

(30) Priorité: 24.12.2009 FR 0959606
(43) Date de publication de la demande: 29.06.2011
(73) Titulaire: Faurecia Bloc Avant, 92000 Nanterre (FR)
(72) Inventeur: Gonin, Vincent, 37540, SAINT CYR SUR LOIRE (FR); Droz Bartholet, Laurent, 25400, AUDINCOURT (FR); Dufee, Julien, 90340, NOVILLARD (FR)
(74) Mandataire: Domenego, Bertrand

(56) Documents cités:
- EP-A1- 2 135 775
- DE-U1-202010 002 511
- FR-A1- 2 882 327
- FR-A1- 2 911 559
- FR-A1- 2 919 568

## Description

La présente invention concerne un ensemble pare-chocs pour véhicule automobile possédant une structure comprenant une paire de longerons supérieurs et une paire de longerons inférieurs.

Les véhicules automobiles modernes sont conçus pour répondre de façon convenable à différents types de chocs frontaux possibles, tels que les chocs à petite vitesse ou chocs parking pour une vitesse comprise entre 2,5 et 4 km/h (ECE 42), les chocs à moyenne vitesse ou « chocs réparabilité », pour une vitesse d'environ 16 km/h (chocs DANNER) et les chocs à grande vitesse, pour une vitesse comprise entre 56 et 65 km/h.

Les véhicules automobiles modernes sont également conçus pour protéger les piétons en cas de chocs piétons et en particulier pour protéger les jambes et la hanche du piéton.

FR 2 919 568 et FR 2 911 559 divulgent des ensembles pare-chocs pour véhicule automobile.

En particulier, FR 2919568 A décrit un ensemble pare-chocs pour véhicule automobile possédant une structure comprenant une paire de longerons supérieurs et une paire de longerons inférieurs, l'ensemble pare-chocs comprenant un bouclier d'absorption d'énergie possédant au moins deux jambages d'absorption d'énergie et une poutre d'absorption d'énergie par compression s'étendant transversalement entre les jambages, l'ensemble pare-chocs comprenant une plaque doublant la poutre de sorte que la poutre est comprimée contre une face frontale de la plaque en cas de choc.

Un but de l'invention est de proposer un ensemble pare-chocs permettant d'absorber convenablement l'énergie d'un choc en limitant l'intrusion d'un objet entrant en collision avec le véhicule vers l'intérieur de la structure du véhicule.

A cet effet, l'invention propose un ensemble pare-chocs selon la revendication 1.

Selon d'autres modes de réalisation, l'ensemble pare-chocs peut comprendre une ou plusieurs des caractéristiques suivantes :
- il comprend deux platines, chaque platine doublant un jambage de sorte que le jambage est comprimé contre une face frontale de la platine correspondante en cas de choc ;
- les platines sont métalliques ;
- la plaque est métallique ;
- la plaque est venue de matière avec les platines ;
- le bouclier comprend une poutre supérieure et une poutre inférieure s'étendant transversalement entre les jambages ;
- la plaque double la poutre supérieure ;
- le bouclier est monobloc ; et
- le bouclier est réalisé en matière plastique.

L'invention concerne également une partie d'extrémité de véhicule automobile comprenant une paire de longerons supérieurs et une paire de longerons inférieurs et un ensemble pare-chocs tel que défini ci-dessus disposé aux extrémités des longerons supérieurs et inférieurs, la plaque s'étendant transversalement entre les longerons en étant reliée à ceux-ci.

Selon d'autres modes de réalisation, la partie d'extrémité peut comprendre une ou plusieurs des caractéristiques suivantes :
- les longerons supérieurs sont les longerons principaux de la structure du véhicule automobile ;
- les longerons inférieurs sont des longerons auxiliaires de la structure du véhicule automobile s'étendant à une hauteur inférieure à celle des longerons principaux ;
- les longerons inférieurs sont des prolonges d'un berceau fixé sous la structure du véhicule automobile ; et
- le berceau est un berceau moteur.

L'invention concerne encore un véhicule automobile comprenant une partie d'extrémité telle que définie ci-dessus.

L'invention et ses avantages seront mieux compris à la lecture de la description qui va suivre, donnée uniquement à titre d'exemple et faite en référence aux dessins annexés, sur lesquels :
- les figures 1 et 2 sont des vues schématiques en perspective, respectivement éclatée et assemblée, d'une partie avant de véhicule automobile selon l'invention ;
- la figure 3 est une vue en perspective d'un ensemble pare-chocs de la partie avant des figures 1 et 2, selon un autre angle de vue ;
- la figure 4 est une vue en perspective d'un renfort de l'ensemble pare-chocs de la figure 3 ; et
- les figures 5 et 6 sont des vues en perspective de renforts selon des variantes de l'invention.

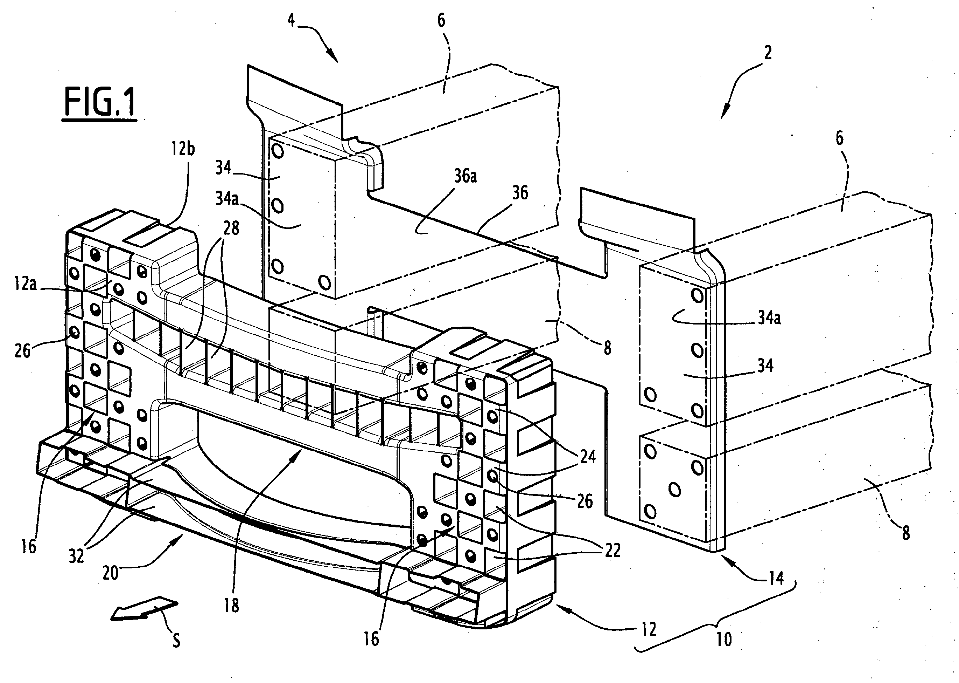

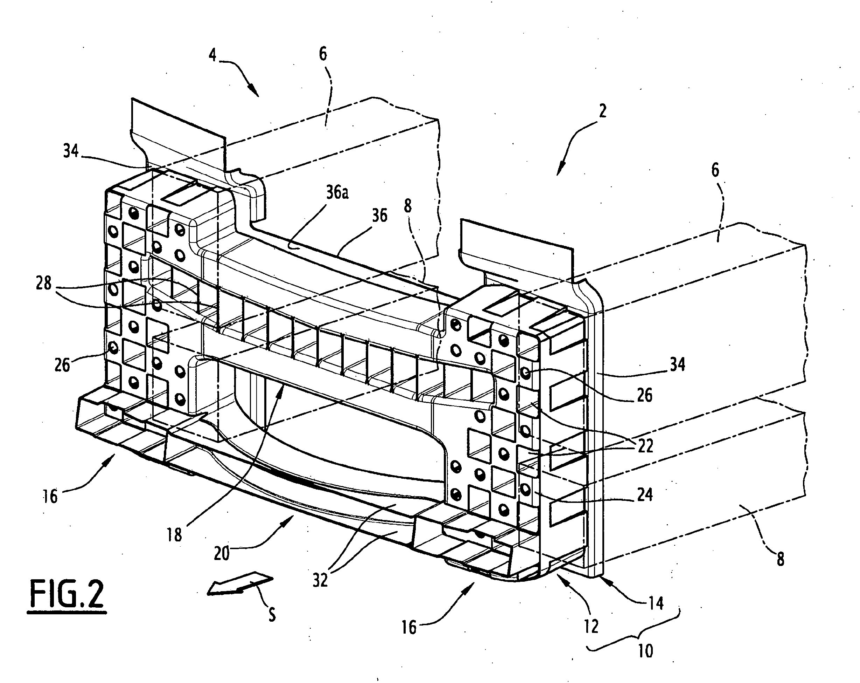

Par la suite, les termes d'orientation s'entendent par référence à l'orientation usuelle des véhicules automobiles, illustrée sur les figures 1 et 2 par une flèche S dirigée horizontalement vers l'avant suivant une direction longitudinale du véhicule automobile.

Tel que représenté sur les figures 1 et 2, un véhicule automobile 2 (partiellement représenté) comprend une partie avant 4 comportant une paire de longerons supérieurs 6, une paire de longerons inférieurs 8 et un ensemble pare-chocs avant 10.

Les longerons supérieurs 6 s'étendent sensiblement suivant la direction longitudinale du véhicule automobile et sont espacés transversalement l'un de l'autre.

Les longerons inférieurs 8 s'étendent sensiblement suivant la direction longitudinale du véhicule automobile et sont espacés transversalement l'un de l'autre. L'écartement transversal entre les longerons inférieurs 8 est sensiblement égal à l'écartement transversal entre les longerons supérieurs 6. Les longerons inférieurs 8 sont situés à une hauteur inférieure à celles des longerons supérieurs 6. Chaque longeron inférieur 8 s'étend sous un longeron 6 sensiblement dans le même plan vertical et longitudinal.

Les extrémités des longerons supérieurs 6 et des longerons inférieurs 8 se situent sensiblement dans le même plan vertical et transversal.

Les longerons supérieurs 6 sont typiquement tarés pour encaisser une force axiale maximale sans flambement comprise entre 80 kN et 100 kN. Les longerons inférieurs 8 sont typiquement tarés pour encaisser une force axiale maximale sans flambement comprise entre 25 kN et 45 kN. Sur certains véhicules au gabarit éloigné de la moyenne, les fourchettes de tarage proposées peuvent différer légèrement sans sortir du cadre de l'invention.

Les longerons supérieurs 6 sont prévus pour recevoir entre eux et supporter au moins en partie une face avant. Une face avant se présente conventionnellement sous la forme d'un cadre portant des organes fonctionnels du véhicule automobile tels qu'un radiateur d'un système de refroidissement du groupe motopropulseur et/ou tels qu'un ou plusieurs radiateurs ou un groupe motoventilateur d'un système de climatisation tel. La face avant est fixée au longeron supérieur 6 de préférence en retrait des extrémités des longerons supérieurs 6.

L'ensemble pare-chocs 10 comprend un bouclier 12 d'absorption d'énergie et un renfort 14 doublant au moins en partie le bouclier 12.

Le bouclier 12 est prévu pour dissiper de l'énergie en se déformant, et notamment en s'écrasant ou en se comprimant suivant la direction longitudinale, sous l'effet d'un choc.

Le bouclier 12 se présente sous la forme d'un bloc de matière présentant une certaine épaisseur suivant la direction longitudinal, entre une face avant 12a et une face arrière 12b du bouclier 12. Le bouclier 12 présente dans cette épaisseur une structure à caissons pour une dissipation importante d'énergie.

Le bouclier 12 comprend deux jambages 16 et une poutre supérieure 18 s'étendant transversalement entre les jambages 16. Chaque jambage 16 est prévu pour s'étendre sensiblement verticalement, la poutre supérieure 18 s'étendant sensiblement horizontalement entre les jambages 16. Chaque jambage 16 est prévu pour venir en appui rigide simultanément sur les extrémités d'un longeron supérieur 6 et d'un longeron inférieur 8 adjacents situés du même côté (figure 2). La poutre supérieure 18 et les jambages 16 définissent conjointement une forme en « H » ou en « U » renversé. La poutre supérieure 18 se situe sensiblement à hauteur des longerons supérieurs 6.

En option, le bouclier 12 comprend une poutre inférieure 20 s'étendant transversalement entre les extrémités inférieures des jambages 16. La poutre inférieure 20 est espacée verticalement de la poutre supérieure 18. Le bouclier 12 muni de la poutre inférieure 20 présente une forme générale de cadre rectangulaire. La poutre inférieure 18 se situe sensiblement à hauteur des longerons inférieurs 8.

Les jambages 16 ont pour fonction d'absorber de l'énergie par compression en cas de choc.

Chaque jambage 16 présente à cet effet une certaine épaisseur et possède une structure à caissons.

Dans l'exemple illustré, chaque jambage 16 présente une structure alvéolaire comprenant des alvéoles s'étendant longitudinalement entre la face avant 12a et une face arrière 12b du bouclier 12. Chaque jambage 16 comprend des alvéoles inversées comprenant des premières alvéoles 22 fermées du côté de la face arrière 12b et ouvertes du côté de la face avant 12a et des deuxièmes alvéoles 24 ouvertes du côté de la face arrière et fermées du côté de la face avant. Les premières alvéoles 22 et les deuxièmes alvéoles 24 sont disposées en quinconce (ou en damier).

Dans l'exemple illustré, les parois fermant les alvéoles 22, 24 sont munies d'orifices 26 d'affaiblissement pour obtenir une dissipation d'énergie satisfaisante. En variante, les parois fermant les alvéoles 22, 24 sont pleines.

La poutre supérieure 18 a également pour fonction d'absorber de l'énergie par compression en cas de choc.

La poutre supérieure 18 présente une certaine épaisseur et possède une structure à caissons.

Dans l'exemple illustré la poutre supérieure 18 présente une section droite sensiblement en « W » définissant deux canaux ouverts vers l'arrière et un canal ouvert vers l'avant, et des nervures de renfort 28 (figures 1 et 2) s'étendant à l'intérieur des canaux.

La poutre inférieure 20 a pour fonction de protéger les jambes d'un piéton en cas de chocs. La poutre inférieure 20 est prévue pour venir impacter la jambe d'un piéton au niveau du tibia, sous le genou.

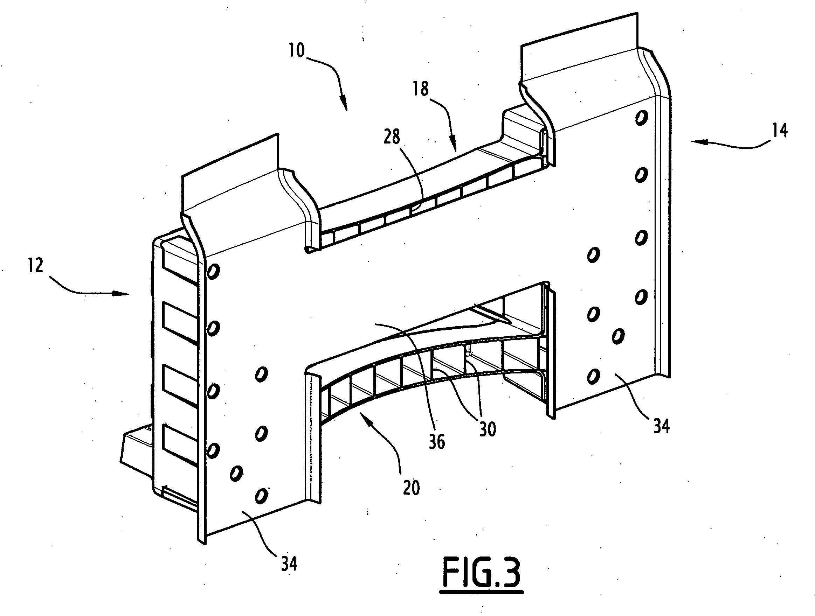

La poutre inférieure 20 est prévue pour travailler essentiellement en flexion lorsqu'elle subit un choc. Dans l'exemple illustré, la poutre inférieure 20 est arquée vers l'avant. Elle présente une section transversale en U ouverte vers l'arrière et des nervures de renfort 30 internes (figure 3).

Le bouclier 12 comprend en outre des nervures de protection des piétons 32 s'étendant en saillie horizontalement vers l'avant à partir de la poutre inférieure 20 et des jambages 16, sensiblement à hauteur de la poutre inférieure 20.

Ces nervures de protection 32 forment une zone de premier contact avec la jambe d'un piéton. Elles sont prévues pour flamber sous un effort faible.

Le renfort 14 se présente sous la forme d'une feuille mince doublant au moins en partie le bouclier 12 et prévu pour fournir un appui rigide au bouclier 12 en vue de son écrasement par compression contre le renfort 14 en cas de choc.

Le renfort 14 comprend des platines 34 espacées transversalement et une plaque 36 s'étendant transversalement entre les platines 34. La plaque 36 est prévue pour doubler la poutre supérieure 18. Chaque platine 34 est prévue pour doubler un jambage 16 respectif. Les platines 34 et la plaque 36 confèrent au renfort 14 une forme en « H » ou en « U » renversé.

Le renfort 14 est prévu pour être disposé contre la face arrière 12b du bouclier 12, en sandwich entre le bouclier 12 et les extrémités des longerons 6, 8.

Chaque platine 34 est fixée aux extrémités d'un longeron supérieur 6 et d'un longeron inférieur 8 adjacents, en sandwich entre lesdites extrémités et un jambage 16. Chaque platine 34 réalise une liaison entre le longeron supérieur 6 et le longeron inférieur 8 adjacents. Chaque platine 34 possède une face frontale 34a d'appui pour un jambage 16.

La plaque 36 s'étend transversalement entre les longerons 6, 8, sensiblement à hauteur des longerons supérieurs 6. La plaque 36 relie les longerons supérieurs 6 entre eux. La plaque 36 possède une face frontale 36a d'appui pour la poutre supérieure 18.

Selon l'invention, la plaque 36 se présente sous la forme d'une feuille mince possédant une rigidité en flexion dans la direction longitudinale faible. La plaque 36 est relativement flexible dans la direction longitudinale à l'état libre et liée à ses extrémités aux longerons supérieurs 6.

En cas de choc impactant la plaque 36 dans la direction longitudinale, la plaque 36 offre peut de résistance en flexion et travaille essentiellement en traction entre les deux longerons supérieurs 6 qui retiennent la plaque 36 à ses extrémités.

La poutre supérieure 18 fonctionne de manière complémentaire avec la plaque 36. La plaque 36, bien qu'étant relativement flexible dans la direction longitudinale, et retenue du fait de sa liaisons aux longerons supérieurs 6 et offre une surface d'appui étendue transversalement pour la poutre supérieure 18 permettant à la poutre supérieure 18 de travailler uniformément en compression contre la plaque 36 en cas de choc. L'énergie est dissipée sur une course faible, par exemple correspondant à l'épaisseur de la poutre supérieure 18 et par exemple comprise entre 100 et 180 mm.

Ce fonctionnement avec des fonctions séparées - compression de la poutre supérieure 18 et traction de la plaque 36 - permet un travail efficace et contrôlé de l'ensemble formé par la poutre supérieure 18 et la plaque 36.

La plaque 36 peut être prévue dans un matériau résistant à la traction, par exemple une tôle métallique, tandis que la poutre supérieure 18 est prévue dans un matériau permettant une dissipation d'énergie importante par compression, par exemple un matériau plastique tel que du Polypropylène (PP). La plaque 36 mince ne s'écrase pas en cas de choc et conserve sa tenue en traction.

L'allongement de la plaque 36 prévue sous la forme d'une feuille métallique peut être réduit (entre 2% et 8%) ce qui permet de limiter l'intrusion d'un autre véhicule ou d'un objet percuté par l'ensemble pare-chocs 10 vers l'intérieur du véhicule automobile 2 et de maintenir une liaison efficace entre les deux longerons supérieurs 6.

Les platines 34 de grande hauteur ou « platines géantes » raccordant chaque longeron supérieur 6 à un longeron inférieur 8 permettent de distribuer les efforts encaissés par l'ensemble pare-chocs 10 sur une hauteur importante dans le véhicule.

Les platines 34 offrent une surface d'appui rigide étendue aux jambages 16, ce qui permet aux jambages 16 de travailler uniformément en compression en cas de chocs, sans flexion dans leur partie médiane située verticalement entre les longerons supérieurs 6 et les longerons inférieurs 8. Cet atout permet une conception homogène des jambages 16 possédant des alvéoles analogues uniformément réparties.

Les dimensions de l'appui offert par chaque platine 34 sont avantageusement comprises entre 100 et 190 mm en largeur et entre 350 et 400 mm en hauteur ce qui correspond à des aires globalement comprises entre 3, 5 et 8 dm².

De manière générale, le bouclier 12 et le renfort 14 fonctionnent de manière complémentaire en cas de choc. Le bouclier 12 épais se comprime en dissipant de l'énergie, tandis que le renfort 14 mince répartit les efforts sur les longerons 6, 8 et fournit un appui à la poutre supérieure 18 sans se comprimer et en conservant sa tenue mécanique en traction.

L'ensemble pare-chocs 10 est prévu pour absorber l'énergie en cas de choc basse vitesse ou moyenne vitesse, de façon à préserver l'intégrité des longerons 6, 8.

Le véhicule muni d'un ensemble pare-chocs selon l'invention est moins intrusif lorsqu'il entre en contact avec un autre véhicule, ce qui bénéficie à la compatibilité inter-véhiculaire à basse et moyenne vitesse.

La structure alvéolaire des jambages 16 facilite la fabrication et confère une capacité d'absorption de l'énergie suffisante sur une épaisseur faible.

Le bouclier 12 est obtenu avantageusement d'un seul bloc par exemple par moulage par injection de matière plastique. Il peut être démoulé suivant une unique direction correspondant à la direction longitudinale du véhicule automobile lorsque le bouclier 12 est fixé sur les longerons 6. Ainsi, le bouclier 12 peut être obtenu de façon simple, avec un coût de fabrication faible.

Dans l'exemple illustré, le bouclier 12 comprend une poutre inférieure 20 venue de matière avec les jambages 16 et la poutre supérieure 18. En variante, le bouclier 12 est dépourvu de poutre inférieure. Il est aussi possible de prévoir une poutre inférieure séparée du bouclier 12 est rapportée entre les extrémités inférieurs des jambages 16.

La structure alvéolaire des jambages 16 permet des dépouilles faibles, voire nulles, ce qui limite le poids, et le coût de fabrication du bouclier 12. Les pièces obtenues sont donc légères et présentent une économie de matière.

La structure alvéolaire des jambages 16 permet également de réduire les épaisseurs locales de parois délimitant les alvéoles. Ainsi cette épaisseur locale peut être réduite dans une gamme comprise entre 2,5 et 4 mm, avantageusement comprise entre 3 mm et 3,5mm.

En outre, et d'une manière générale, le démoulage du bouclier 12 monobloc est facilité puisque les faibles dépouilles et leur absence permet un démoulage par mouvement de deux demi-moules opposés dans des sens opposés le long d'un axe correspondant à l'axe longitudinal du véhicule automobile. Ainsi il n'est pas nécessaire de prévoir des tiroirs ou des parties mobiles dans le moule.

En outre, les dépouilles faibles voire nulles dans les jambages 16 en damier permettent d'obtenir une raideur uniforme lors d'un enfoncement ou d'un écrasement, par exemple lors d'un choc à moyenne vitesse. Ainsi, il est possible d'obtenir un palier d'effort sensiblement constant en fonction du déplacement, ce qui augmente l'énergie dissipée et diminue la course d'absorption, tout en restant sous la force de tarage des longerons 6, 8 définis plus haut.

Il en résulte que l'énergie d'un choc peut être dissipée moyennant une course réduite et que la solution s'avère très compacte. Cette solution est donc particulièrement adaptée aux véhicules de faible cylindrée présentant une course longitudinale d'absorption de chocs inférieurs à 250 mm, et notamment inférieure à 200 mm. Les jambages 16 présentent une épaisseur longitudinale comprise entre 220 et 220 mm. Ceci permet une absorption d'énergie efficace tout en limitant le porte à faux du bouclier 12 pris entre les platines 14 et l'extrémité avant du bouclier 12.

Le renfort 14 est avantageusement réalisé en une seule pièce et formé à partir d'un flanc de tôle métallique découpé et si nécessaire mis en forme, notamment par emboutissage et/ou pliage. Ainsi, le renfort 14 est obtenu facilement et à faible coût, et présente une résistance élevée.

En variante, le renfort 14 est formé par fixation entre eux de flancs métalliques, par exemple deux flancs définissant les platines 34 et un flanc définissant la plaque 36.

Chaque jambage 16 est fixé sur la platine 34 correspondante par vissage ou par collage. Cette deuxième solution est avantageuse, dans la mesure où elle permet une bonne répartition des efforts. En effet, les contraintes des design et à l'assemblage par vissage (insert métallique, trou, semelle de rigidification, espace pour les visseuses) sont levées tandis que les contraintes localisées et les risques d'arrachement causés par le vissage sont très fortement atténuées. En outre la géométrie choisie formée d'alvéoles fermées inversées disposées en quinconce augmente considérablement la surface d'encollage à l'arrière des montants et participe à la répartition favorable des efforts.

Tel que représenté sur les figures 1 à 4, le renfort 14 comprend une plaque 36 sensiblement plane coplanaire avec les platines 34.

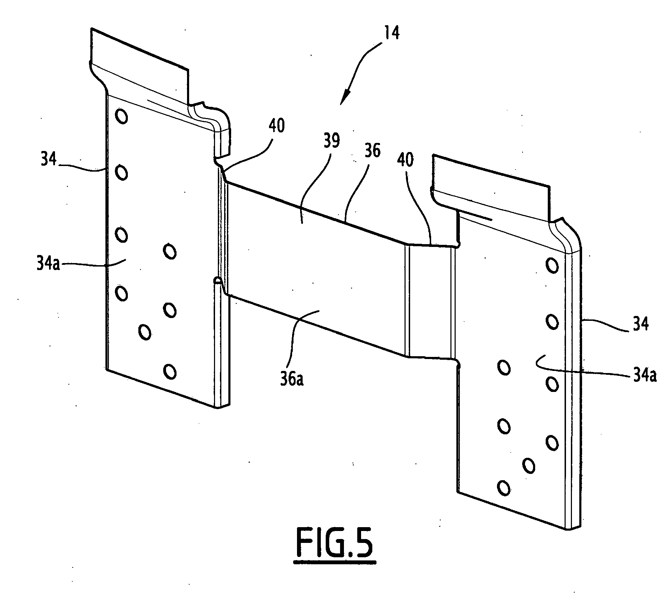

Dans le mode de réalisation de la figure 5, la plaque 36 possède une portion centrale 39 plane décalée par rapport au platine 34 pour suivre la face arrière 12b du bouclier 12 le long de la poutre supérieure 18 et des portions latérales 40 courbées reliant la plaque 36 aux platines 34.

La plaque 36 de la figure 5 présente une section droite rectiligne sur toute sa longueur et conserve un moment de flexion faible dans la direction longitudinale.

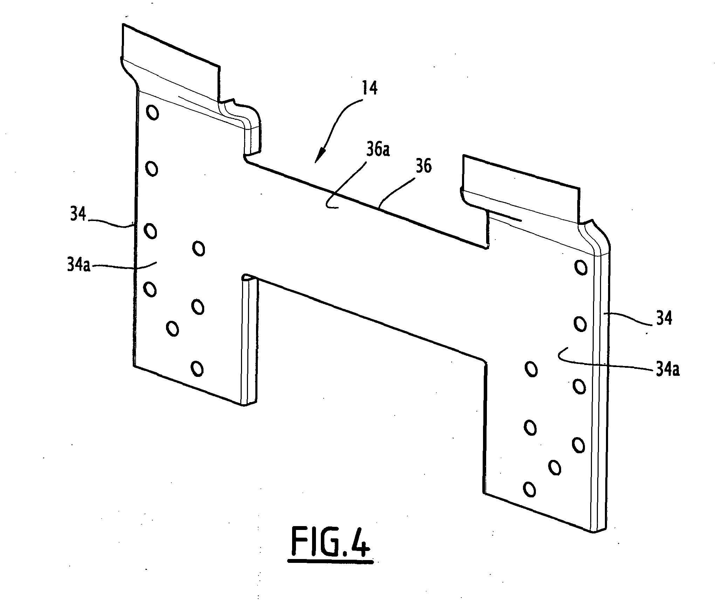

Tel que représenté sur les figures 4 et 5, les bords latéraux 42 supérieur et inférieur de la plaque 34 sont plats.

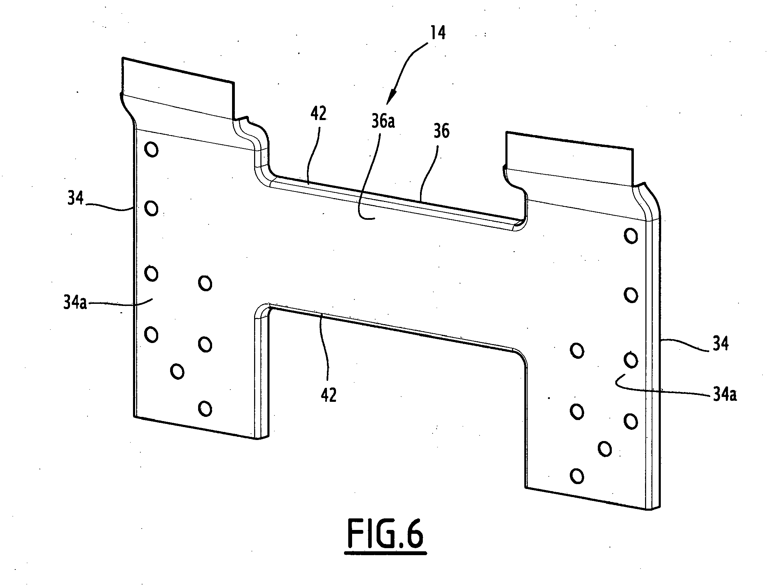

Dans le mode de réalisation de la figure 6, la plaque 34 est plane mais munie de bords latéraux 42 relevés ou « tombés » pour limiter les risques d'apparition de fissures sur les bords 42 de la plaque 36. Néanmoins, les bords latéraux relevés présentent une hauteur faible de façon que la plaque 36 conserve un moment de flexion faible dans la direction perpendiculaire à sa face frontale 36a. Pour limiter le moment de flexion de la plaque 36, les bords latéraux 42 sont avantageusement rabattus.

De préférence, les bords latéraux 42 tombés et/ou rabattus s'étendent en vue en section droite sur une longueur comprise entre 5 mm et 10 mm.

De manière générale, la plaque est prévue en tout point de sa longueur avec une section droite lui conférant une rigidité en flexion faible dans la direction longitudinale, de sorte que la plaque soit relativement flexible dans la direction longitudinale à l'état libre, mais que, du fait de sa liaison aux longerons supérieurs, elle travaille essentiellement en traction entre les longerons supérieurs en cas de choc et offre un appui relativement rigide pour la poutre qui travaille essentiellement en compression.

Les longerons supérieurs 6 sont de préférence les longerons principaux de la structure du véhicule automobile.

Les longerons inférieurs 8 sont dans un mode de réalisation des longerons inférieurs de la structure du véhicule automobile prévus par exemple sous la forme de prolonges s'étendant à partir des longerons inférieurs 6 à distance des extrémités de ces derniers.

Dans un mode de réalisation avantageux, les longerons inférieurs 8 sont des prolonges d'un berceau ou châssis auxiliaire fixé sous la structure du véhicule automobile. Le berceau peut supporter d'autres équipements du véhicule automobile tels que des bras de suspension, une barre anti-roulis et/ou un système de direction. Il peut supporter au moins en partie un moteur, auquel cas il peut être nommé « berceau moteur ».

Le bouclier 12 peut porter des blocs optiques additionnels (non représentés), des éléments non représentés de fixation de panneaux de la peau du bouclier, les éléments de fixation non représentés une calandre, des volets pilotés assemblés derrière la calandre pour canaliser les flux d'air.

L'invention s'applique aux parties avant de véhicules automobiles ainsi qu'aux parties arrière de véhicules automobiles, et, de manière générale, aux parties d'extrémités de véhicules automobiles.

## Revendications

1. Ensemble pare-chocs pour véhicule automobile possédant une structure comprenant une paire de longerons supérieurs (6) et une paire de longerons inférieurs (8), l'ensemble pare-chocs comprenant un bouclier (12) d'absorption d'énergie possédant au moins deux jambages (16) d'absorption d'énergie par compression chacun prévu pour venir en appui sur les extrémités d'un longeron supérieur (6) et d'un longeron inférieur (8) et une poutre (18) d'absorption d'énergie par compression s'étendant transversalement entre les jambages (16), l'ensemble pare-chocs comprenant une plaque (36) doublant la poutre (18) de sorte que la poutre (18) est comprimée contre une face frontale (36a) de la plaque (36) en cas de choc.

2. Ensemble pare-chocs selon la revendication 1, comprenant deux platines (34), chaque platine (34) doublant un jambage (16) de sorte que le jambage (16) est comprimé contre une face frontale (34a) de la platine (34) correspondante en cas de choc.

3. Ensemble pare-chocs selon la revendication 1 ou 2, dans lequel les platines (34) sont métalliques.

4. Ensemble pare-chocs selon l'une quelconque des revendications précédentes, dans lequel la plaque (36) est métallique.

5. Ensemble pare-chocs selon l'une quelconque des revendications précédentes, dans lequel la plaque (36) est venue de matière avec les platines (34).

6. Ensemble pare-chocs selon l'une quelconque des revendications précédentes, dans lequel le bouclier comprend une poutre supérieure (18) et une poutre inférieure (20) s'étendant transversalement entre les jambages (16).

7. Ensemble pare-chocs selon la revendication 5, dans lequel la plaque (36) double la poutre supérieure (18).

8. Ensemble pare-chocs selon l'une quelconque des revendications précédentes, dans lequel le bouclier (12) est monobloc.

9. Ensemble pare-chocs selon l'une quelconque des revendications précédentes, dans lequel le bouclier (12) est réalisé en matière plastique.

10. Partie d'extrémité de véhicule automobile comprenant une paire de longerons supérieurs (6) et une paire de longerons inférieurs (8) et un ensemble pare-chocs selon l'une quelconque des revendications précédentes disposé aux extrémités des longerons supérieurs (6) et inférieurs (8) la plaque s'étendant transversalement entre les longerons en étant reliée à ceux-ci.

11. Partie d'extrémité selon la revendication 10, dans laquelle les longerons supérieurs (6) sont les longerons principaux de la structure du véhicule automobile.

12. Partie d'extrémité selon la revendication 10 ou 11, dans lequel les longerons inférieurs (8) sont des longerons auxiliaires de la structure du véhicule automobile s'étendant à une hauteur inférieure à celle des longerons principaux.

13. Partie d'extrémité selon l'une quelconque des revendications 10 à 12, dans lequel les longerons inférieurs (8) sont des prolonges d'un berceau fixé sous la structure du véhicule automobile.

14. Partie d'extrémité selon la revendication 13, dans lequel le berceau est un berceau moteur.

15. Véhicule automobile comprenant une partie d'extrémité selon l'une quelconque des revendications 10 à 14.

## Patentansprüche

1. Stoßfängereinheit für ein Kraftfahrzeug, welches eine Struktur hat, die ein Paar obere Längsträger (6) und ein Paar untere Längsträger (8) aufweist, wobei die Stoßfängereinheit ein Energieabsorptionsschild (12) aufweist, welches aufweist zumindest zwei Säulen (16) zur Energieabsorption durch Komprimierung, wobei jede vorhergesehen ist, um sich gegen die Enden eines oberen Längsträgers (6) und eines unteren Längsträgers (8) zu stützen, und einen Balken (18) zur Energieabsorption durch Komprimierung, welcher sich transversal zwischen den Säulen (16) erstreckt, wobei die Stoßfängereinheit eine Platte (36) aufweist, welche den Balken (18) aufdoppelt, so dass der Balken (18) im Falle eines Stoßes gegen eine Frontseite (36a) der Platte (36) gepresst wird.

2. Stoßfängereinheit gemäß dem Anspruch 1, aufweisend zwei Unterlageplatten (34), wobei jede Unterlageplatte (34) eine Säule (16) aufdoppelt, so dass die Säule (16) im Fall eines Stoßes gegen eine Frontseite (34a) der korrespondierenden Unterlageplatte (34) gepresst wird.

3. Stoßfängereinheit gemäß dem Anspruch 1 oder 2, bei welcher die Unterlageplatten (34) aus Metall sind.

4. Stoßfängereinheit gemäß irgendeinem der vorhergehenden Ansprüche, bei welcher die Platte (36) aus Metall ist.

5. Stoßfängereinheit gemäß irgendeinem der vorhergehenden Ansprüche, bei welcher die Platte (36) materialmäßig einstückig mit den Unterlageplatten (34) ist.

6. Stoßfängereinheit gemäß irgendeinem der vorhergehenden Ansprüche, bei welcher der Schild (12) einen oberen Balken (18) und einen unteren Balken (20) aufweist, welche sich transversal zwischen den Säulen (16) erstrecken.

7. Stoßfängereinheit gemäß dem Anspruch 5, bei welcher die Platte (36) den oberen Balken (18) aufdoppelt.

8. Stoßfängereinheit gemäß irgendeinem der vorhergehenden Ansprüche, bei welcher der Schild (12) aus einem Block ist.

9. Stoßfängereinheit gemäß irgendeinem der vorhergehenden Ansprüche, bei welcher der Schild (12) aus Kunststoffmaterial realisiert ist.

10. Endteil eines Kraftfahrzeugs, welcher ein Paar obere Längsträger (6) und ein Paar untere Längsträger (8) und eine Stoßfängereinheit gemäß irgendeinem der vorhergehenden Ansprüche aufweist, welche an den Enden der oberen und der unteren Längsträger (6, 8) angeordnet ist, wobei sich die Platte transversal zwischen den Längsträgern erstreckt und mit diesen verbunden ist.

11. Endteil gemäß dem Anspruch 10, bei welchem die oberen Längsträger (6) die Hauptlängsträger der Kraftfahrzeugstruktur sind.

12. Endteil gemäß dem Anspruch 10 oder 11, bei welchem die unteren Längsträger (8) Hilfslängsträger der Kraftfahrzeugstruktur sind, welche sich auf einer geringeren Höhe als die Hauptlängsträger erstrecken.

13. Endteil gemäß irgendeinem der Ansprüche 10 bis 12, bei welchem die unteren Längsträger (8) Verlängerungen einer an der Kraftfahrzeugstruktur befestigten Aufhängung sind.

14. Endteil gemäß dem Anspruch 13, bei welchem die Aufhängung eine Motoraufhängung ist.

15. Kraftfahrzeug, aufweisend einen Endteil gemäß irgendeinem der Ansprüche 10 bis 14.

## Claims

1. A bumper assembly for a motor vehicle having a structure comprising a pair of upper side members (6) and a pair of lower side members (8), the bumper assembly comprising an energy absorbing panel (12) having at least two absorbing columns (16) for absorbing energy by compression, each provided to bear on the ends of an upper side member (6) and a lower side member (8) and a beam (18) for absorbing energy by compression, extending transversely between the columns (16), the bumper assembly comprising a plate (36) doubling the beam (18) such that the beam (18) is compressed between a frontal face (36a) of the plate (36) in case of impact.

2. The bumper assembly according to claim 1, comprising two stages (34), each stage (34) doubling a column (16) such that the column (16) is compressed against a front face (34a) of the corresponding stage (34) in case of impact.

3. The bumper assembly according to claim 1 or 2, wherein the stages (34) are made of metal.

4. The bumper assembly according to any one of the preceding claims, wherein the plate (36) is made of metal.

5. The bumper assembly according to any one of the preceding claims, wherein the plate (36) is formed in a single piece with the stages (34).

6. The bumper assembly according to any one of the preceding claims, wherein the panel comprises an upper beam (18) and a lower beam (20) extending transversely between the columns (16).

7. The bumper assembly according to claim 5, wherein the plate (36) lines the upper beam (18).

8. The bumper assembly according to any one of the preceding claims, wherein the panel (12) is a single piece.

9. The bumper assembly according to any one of the preceding claims, wherein the panel (12) is made from plastic.

10. An end portion of a motor vehicle comprising a pair of upper side members (6) and a pair of lower side members (8) and a bumper assembly according to any one of the preceding claims arranged at the ends of the upper (6) and lower (8) beams, the plate extending transversely between the side beams while being connected thereto.

11. The end portion according to claim 10, wherein the upper side members (6) are the main side members of the structure of the motor vehicle.

12. The end portion according to claim 10 or 11, wherein the lower side members (8) are auxiliary side members of the structure of the motor vehicle extending over a smaller height than that of the main side members.

13. The end portion according to any one of claims 10 to 12, wherein the lower side members (8) are extensions of a cradle fastened under the structure of the motor vehicle.

14. The end portion according to claim 13, wherein the cradle is an engine cradle.

15. A motor vehicle comprising an end portion according to any one of claims 10 to 14.
